# EUROPEAN PATENT APPLICATION

(11) **EP 1 555 639 A2**
(43) Date of publication of application: **20.07.2005**
(21) Application number: 05250106.1
(22) Date of filing: 11.01.2005
(51) Int. Cl.: G07F 9/02

(54) **Display system for vending machine**

(30) Priority: 13.01.2004 JP 2004005455; 15.01.2004 JP 2004008317; 15.01.2004 JP 2004008302
(71) Applicant: Sanden Corporation, Isesaki-shi, Gunma 372-8502 (JP)
(72) Inventor: Sato, Masaaki, Isesaki-shi Gunma 372-8502 (JP); Tokizawa, Kuniyuki, Isesaki-shi Gunma 372-8502 (JP); Sone, Yuji, Isesaki-shi Gunma 372-8502 (JP); Nishio, Junichi, Isesaki-shi Gunma 372-8502 (JP)
(74) Representative: Haley, Stephen

(57) **Abstract**

A vending machine display system includes a public server (111) for allowing a delivering computer (120) to periodically upload news data, a news server (112) for downloading the updated news data from the public server (111), processing the updated news data into a form available for delivering to a vending machine (100) and storing a prepared news data, and the vending machine (100) having means for downloading the prepared news data from the news server (112) and displaying news on a news displaying region (A5) of a display (14). The vending machine (100) stops displaying the news on the news displaying region (A5) if it has been failing to access the news server (112) more than a predetermined time period.

## Description

The present invention relates to a vending machine for vending commodities such as a canned beverage, a bottled beverage, and a plastic bottled beverage, and specifically to a vending machine provided with a display for displaying an image on a side facing to customers.

As a vending machine for vending commodities such as a canned beverage, a bottled beverage, and a plastic bottled beverage, a vending machine provided with a display for displaying commodity images available for sale on a side facing to customers is known. This vending machine has a touch sensor for detecting a place on a surface of the display where a customer's finger touches and determining the coordinates on the surface. The vending machine determines whether any one of commodity images is selected on the basis of detected signals from the touch sensor. When a commodity selection is carried out, the vending machine vends the selected commodity.

This vending machine easily performs processes, such as replacements of commodity samples and changing places thereof in a conventional vending machine which the commodity samples are placed, by setting or changing kinds and places of commodity images shown on the display.

Incidentally, a vending machine provided with a display on a side facing to customers can provide customers with various displays, which appeals to customers and promotes sales of the commodities. An item of the displays is news.

This news display is available for a vending machine provided with a communication facility which periodically accesses an external news server and downloads news data.

The vending machine principally has to display the latest news. If the vending machine does not update news of the previous day and still displays the news, this may lowers the trustworthiness of the vending machine, sales of the commodities thereof, and the reputation of the manufacturer of the commodities.

An object of the present invention is to provide a display system that enables a vending machine to appropriately display news.

In order to achieve the object, the vending machine display system according to the present invention includes a public server for allowing a delivering computer to periodically upload news data; a news server for periodically checking news data uploaded to the public server and, in response to an updated news data, downloading the updated news data, processing the updated news data into a form available for delivering to the vending machine and storing a prepared news data; and a vending machine including means for periodically accessing the news server, downloading the prepared news data, and displaying news on a news displaying region of a display, wherein said vending machine is provided with means for stopping displaying news on the news displaying region if it has been failing to access the news server more than a predetermined time period.

When the vending machine tries to download the prepared news data by periodically accessing the news server in this vending machine display system and the vending machine has been failing to access the news server more than a predetermined time period, the vending machine can stop displaying the news on the news displaying region of the display. This enables the vending machine to display appropriate news on the display and to prevent problems caused by displaying obsolete news being occurred.

The above mentioned and other objects, features, and effects of the present invention will be apparent by reading the description later with reference to the appended drawings.
Fig. 1 is a block diagram illustrating a configuration of a vending machine display system;
Fig. 2 is a front view of the vending machine shown in Fig. 1;
Fig. 3 is a sectional side view of the vending machine shown in Fig. 1;
Fig. 4 is a block diagram illustrating a configuration of a controlling system of the vending machine shown in Fig. 1;
Fig. 5 is a diagram showing a waiting image of the vending machine shown in Fig. 1;
Fig. 6 (A) is a flowchart showing a flow of downloading news data at the management center shown in Fig. 1;
Fig. 6 (B) is a flowchart showing a flow of delivering data at the management center shown in Fig. 1;
Fig. 7 (A) is a flowchart showing a flow of displaying news at the vending machine shown in Fig. 1;
Fig. 7 (B) is a flowchart showing a flow of switching display at the vending machine shown in Fig. 1;
Fig. 8 is a diagram showing a vending image of the vending machine shown in Fig. 1 before a commodity is selected;
Fig. 9 is a diagram showing a vending image of the vending machine shown in Fig. 1 after a commodity is selected;
Fig. 10 is a diagram showing a vending image of the vending machine shown in Fig. 1 after a commodity is discharged;
Fig. 11 is a flowchart showing a flow of selling a commodity at the vending machine shown in Fig. 1;
Fig. 12 is a flowchart showing a flow of selling a commodity at the vending machine shown in Fig. 1;
Fig. 13 is a flowchart showing a flow of displaying raking of commodities at the vending machine shown in Fig. 1;
Fig. 14 is a diagram showing a waiting image of the vending machine shown in Fig. 1;
Fig. 15 is another flowchart showing a flow of displaying raking of commodities;
Fig. 16 is a diagram showing a waiting image different from that shown in Fig. 14;
Fig. 17 is a diagram showing a ranking image of the vending machine shown in Fig. 1;
Fig. 18 (A) and (B) are diagrams showing other examples of ranking images;
Fig. 19 (A) is a flowchart showing a flow of setting a background at the vending machine shown in Fig. 1;
Fig. 19 (B) is a flowchart showing a flow of setting a background at the vending machine shown in Fig. 1;
Fig. 20 is a diagram showing a background setting image of the vending machine shown in Fig. 1;
Fig. 21 is a flowchart showing a first example of automatically selecting a background image;
Fig. 22 is a flowchart showing a second example of automatically selecting a background image;
Fig. 23 is a flowchart showing a third example of automatically selecting a background image; and
Fig. 24 is a flowchart showing a fourth example of automatically selecting a background image.

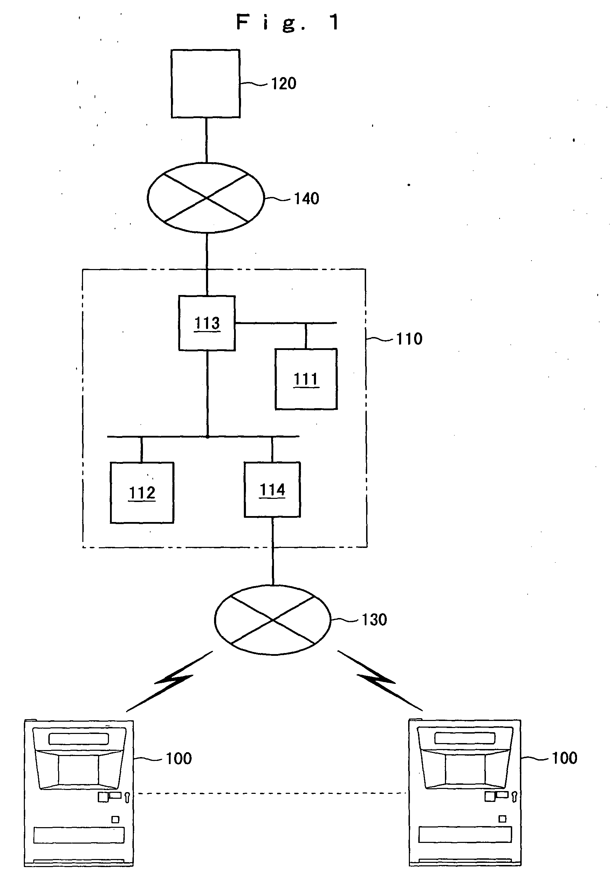

Figs. 1 to 12 show an embodiment of the present invention.

A configuration of a vending machine display system will be described with reference to Fig. 1.

Reference numeral 100 in Fig. 1 denotes vending machines, 110 denotes a management center for managing news delivering, 120 denotes a computer that delivers news (hereinafter referred to as "delivering computer"), 130 denotes a wireless packet transmission network such as a mobile phone network or a PHS phone network, and 140 denotes a wide area network (WAN) 140 using a public circuit or a private circuit. Reference numeral 111 in the management center 110 denotes a public server (FTP server), 112 denotes a news server (FTP server), 113 denotes a firewall, and 114 denotes a router.

Although not shown in the drawings, a segment at the news server 112 in the management center 110 is provided with a server for sending image data, letter data, and sound data to be described to the each vending machine 100 and a server for receiving sales data from the each vending machine 100.

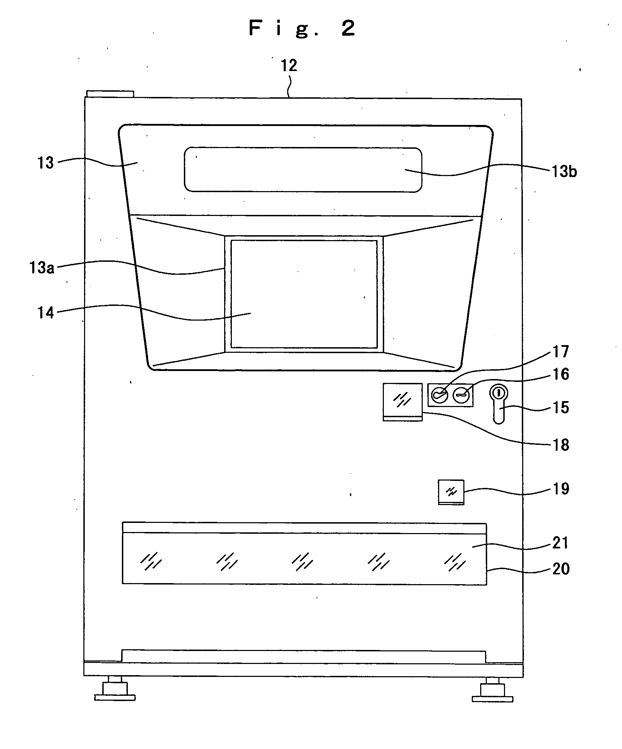

The delivering computer 120 is owned by a news delivering company, which made a contract with an owner of the vending machine display system to deliver news. This delivering computer 120 periodically upload news data including world/domestic/business news, sports news, and weather forecast to the public server 111 via the wide area network 140. In other words, the public server 111 allows the delivering computer 120 to periodically upload news data. The news server 112 periodically checks news data uploaded to the public server 111. When the news is updated, the news server 112 downloads the updated news and processes the news to a form available to be delivered to the vending machine 100 and stores the news. Each vending machine 100 periodically accesses news server 112 via the wireless packet transmission network 130, downloads the prepared news data for delivering, and displays the news on display 14 (see Fig. 2).

Although the public server 111 is in DMZ (DeMilitarized Zone), the firewall 113 forbids the public server 111 to access the news server 112. Thus, an internal network including the news server 112 is not affected if the public server 111 is attacked from outside. Therefore, the news data for delivering stored in the news server 112 has no risk of getting tampered.

The delivering computer 120 and the public server 111 in the management center 110 can communicate via an Internet. The vending machine 100 to be described has a modem 38 in addition to a wireless communication part 40 that can be connected to the wireless packet transmission network 130. Hence, the vending machine 100 can be adapted to access the news server 112 via the Internet from the modem 38 without using the wireless communication part 40 and download news data.

Specific configuration of the vending machine 100 shown in Fig. 1 will be described with reference to Figs. 2 to 5.

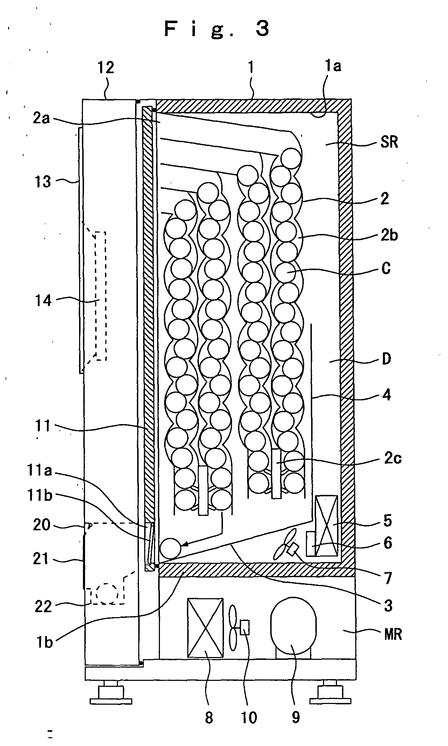

Figs. 2 and 3 show the architecture of the vending machine. Here, the near part of Fig. 2 is called "front" and the back part is called "back", the left side is called "left" and the right side is called "right".

A cabinet 1 has a shape of box with an opening at the front. the cabinet 1 contains a heat insulated inner box 1a with an opening at the front. Inside the inner box 1a is a container for commodities (no reference numeral). This container for commodities is divided into separate rooms SR arranged side by side separated by heat insulated partition plates (not shown).

Commodity containing racks 2 made of a serpentine rack are placed in the each separate room SR. This commodity containing rack 2 has a commodity feeding slot 2a at the upper part of the front side. The commodity containing rack 2 contains commodities C such as canned beverages, bottled beverages, and plastic bottled beverages in a serpentine containing path 2b with stacking the products side by side. A vent mechanism 2c for discharging a contained commodities C by dropping a commodity C along a shooting board 3 is provided under the commodity containing rack 2. The each commodity containing rack 2 placed at the each separate room SR is provided with a soled out detecting sensor (not shown) for detecting out of stock for the commodities C in the each containing path 2b. The commodity containing rack 2 is not limited to the serpentine rack, racks of other forms capable of discharging a contained commodity as in the serpentine rack can be used.

A shoot board 3 and a duct board 4 are provided for the each separate room SR at the bottom and the back. In the space at the back of the shoot board 3 and the duct board 4, an evaporator 5 and an electric heater 6 of cooling machine forming instruments, an air blower 7 for cooling/ warming air circulation and the like are placed. In the space at the back of duct board 4 is configured as a duct D. Inside the each separate room SR, a temperature sensor (not shown) for detecting a temperature of commodity to be discharged soon in the commodity containing rack 2 is provided.

An under floor board 1b of the inner box 1a, a machine room MR is provided. In the machine room MR, a condenser 8, a compressor 9, and expansion means (not shown) of cooling machine forming instruments, an air blower 10 for exhausting heat and the like are located.

At the front side of the inner box 1a, a heat insulated inner door 11 for freely opening and shutting its opening at the front side is provided. At the front part of upper, bottom, the left and the right sides of the inner box 1a (the front side of bottom board 1b is the front side of lower part) and the front part of each partition plate, a gasket (no reference numeral) for air sealing a commodities containing room (each separate room SR) with the inner door 11 shut is provided. The each separate room SR forms an independent heat insulated room with the inner door 11 shut. At the lower part of the inner door 11, windows 11a corresponding to the shoot boards 3 of respective the separate rooms SR are formed. The each window 11a has a flap door 11b that is pushed out by the commodity C dropped along the shoot board 3.

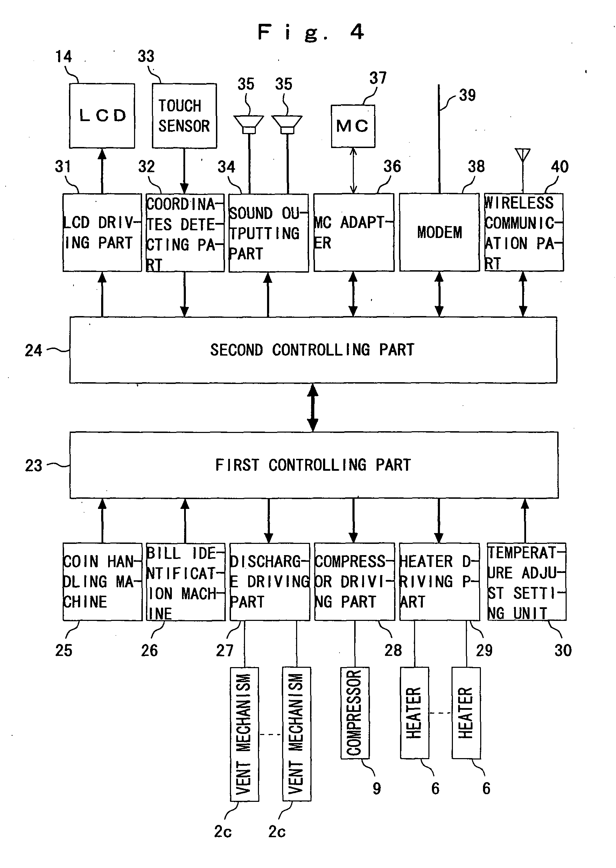

As the each separate room SR forms an independent heat insulated room and the evaporator 5 and the electric heater 6 are independently provided for the each separate room SR, this vending machine can arbitrarily select and perform any one from three modes of cooling, warming, non-cooling/warming for the each separate room SR with a temperature adjust setting unit 30 (see Fig. 4) to be described.

An opening at the front side of the cabinet 1 has an outside door 12 for freely opening and shutting itself. A face panel 13 is provided on the surface of outside door 12. The face panel 13 has a rectangle window 13a for exposing a surface of a liquid crystal display 14 and an advertising part 13b for displaying the name of manufacturer or the name of products in letters.

The liquid crystal display (hereinafter referred to as LCD) 14 is for displaying a still image and a motion image in color. The LCD 14 is placed inside the face panel 13 so that the surface of the LCD 14 is exposed through the window 13a. A well-known display that enables a display like the LCD 14, such as a CRT (Cathode Ray Tube) display, a PDP (Plasma Display Panel) or the like can be employed instead of the LCD 14.

A touch sensor 33 (see Fig. 4) for detecting coordinates of the place where a customer's finger touches on the surface of the LCD 14 is provided on the surface of LCD 14, though not shown in Figs. 2 and 3. Instead of a well-known an electrostatic transparent touch panel or a pressure sensitive transparent touch panel, a sensor with a light emitting part and a light receiving part forming an infrared sensor arranged with equal intervals on the upper, bottom, left, and right sides of a rectangle frame can be employed as the touch sensor 33.

At the front side of the outside door 12, a lock manipulation lever 15, a coin slot 16, a return coin lever 17, a bill slot 18, a return coin drop 19, a commodity take out opening 20 are laid out as shown in Fig. 2. The lock manipulation lever 15 is for operating a lock mechanism (not shown) provided inside the external door 12. The lock manipulation lever 15 is available when it is unlocked by the key. At commodity take out opening 20, a flap door 21 that can be opened by hands is provided. A commodity receiving board 22 is provided inside the flap door 11 for receiving a commodity C discharged through the flap door 11b.

Fig. 4 illustrates a configuration of a controlling system of the vending machine shown in Figs. 2 and 3.

A first controlling part 23 is principally for controlling temperature adjustment and discharging of the commodities C. A second controlling part 24 is principally for controlling display of the LCD 14 and data transmission with the outside. The controlling parts 23 and 24 are composed of a computer including a CPU, RAM, ROM and the like. The controlling parts 23 and 24 can exchange data necessary for controlling. The first controlling part 23 and the second controlling part 24 may also be configured in one computer.

The first controlling part 23 is connected with a coin handling machine 25, a bill identification machine 26, a discharge driving part 27, a compressor driving part 28, a heater driving part 29, a temperature adjust setting unit 30. The first controlling part 23 is connected with a sold out detecting sensor (not shown), which detects out of stock for commodities C in commodity containing rack 2 placed in the each separate room SR for each containing path 2b, via a sold out detecting part (not shown). The first controlling part 23 is also connected with temperature sensor (not shown), which detects a temperature of the commodity in the each separate room SR soon to be discharged, via temperature detecting part (not shown).

The coin handling machine 25 and the bill identification machine 26 are placed inside the external door 12. The coin handling machine 25 authenticates a coin dropped through the coin slot 16, counts the number of coins, stores the coins, and sends data on the amount coins to the first controlling part 23. The bill identification machine 26 authenticates a bill inserted through the bill slot 18 and stores the bills, and sends data on the amount of bills to the first controlling part 23.

The discharge driving part 27 is for controlling operations of the vent mechanism 2c provided for the each commodity containing rack 2, more specifically for controlling operations of an actuator such as a solenoid used for the vent mechanism 2c. The discharge driving part 27 discharges a desired commodity C by operating a predetermined the vent mechanism 2c on the basis of controlling signals from the first controlling part 23.

The compressor driving part 28 is for controlling operations of the compressor 9 forming the cooling machine, more specifically for controlling operations of a motor for driving the compressor 9. The compressor driving part 28 drives the compressor 9 on the basis of controlling signals from the first controlling part 23.

The heater driving part 29 is for controlling passage of electric current to the each electric heater 6. The heater driving part 29 passes a current to a predetermined electric heater 6 on the basis of controlling signals from the first controlling part 23.

The temperature adjust setting unit 30 is for selecting any one from the described three modes for the each separate room SR. The temperature adjust setting unit 30 is provided with a push button switch and the like for mode selection. The temperature adjust setting unit 30 sends data on the selected mode to the first controlling part 23.

The second controlling part 24 is connected with a LCD driving part 31, a coordinates detecting part 32, a sound outputting part 34, a memory card adapter (hereinafter referred to as "MC adapter") 36, a modem 38, and a wireless communication part 40.

The LCD driving part 31 is for controlling displays of the LCD 14 provided for the external door 12. The LCD driving part 31 drives the LCD 14 and displays a desired image on the basis of image data and controlling signals from the second controlling part 24.

The coordinates detecting part 32 sends data on coordinates to the second controlling part 24 on the basis of detected signals from the touch sensor 33.

The sound outputting part 34 drives speaker 35 and outputs a desired sound on the basis of sound signals and controlling signals from the second controlling part 24. At least one speaker 35 is placed at both sides of the LCD 14 in the external door 12. The speaker 35 provides realistic sound effect with stereo system.

The MC adapter 36 enables a memory card (hereinafter referred to as "MC") 37 to connect to the second controlling part 24. The modem 38 is for transmitting data between the second controlling part 24 and the management center 110 via the Internet through the public line 39 or the like. The wireless communication part 40 is for transmitting data between the second controlling part 24 and the management center 110 via a wireless packet transmission network such as the mobile phone network or the PHS phone network.

Image data such as still images and motion images and the letter data that can be displayed on the LCD 14 and the sound data output from the speaker 35 can be captured in storage means such as hard disc provided for the second controlling part 24 by the MC 37, data transmission performed by the modem 38, or data transmission performed by the wireless communication part 40. The data can be updated arbitrarily.

The image data, letter data, and sound data include displaying images, displaying letters and outputting sounds in a waiting image, a vending image, an advertising image, a campaign image or a inquiring image is displayed.

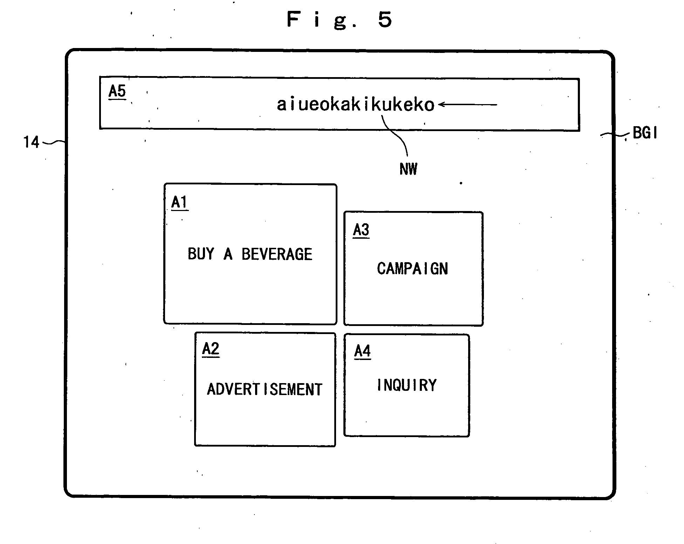

Fig. 5 shows a waiting image displayed on the LCD 14 of the vending machine shown in Figs. 2 and 3.

In the waiting image, a menu selecting region A1 including the letters "Buy a beverage", a menu selecting region A2 including the letters "Invitation to Advertisement", a menu selecting region A3 including the letters "Invitation to Campaign", a menu selecting region A4 including the letters "Inquire", and a news displaying region A5 for displaying news NW in letters are set. A still image corresponding to the each of menu selecting regions A1 to A4 is displayed with letters. Reference character BG1 shown in the waiting image denotes a background image (a still image or a motion image). The background image is set by a background setting to be described.

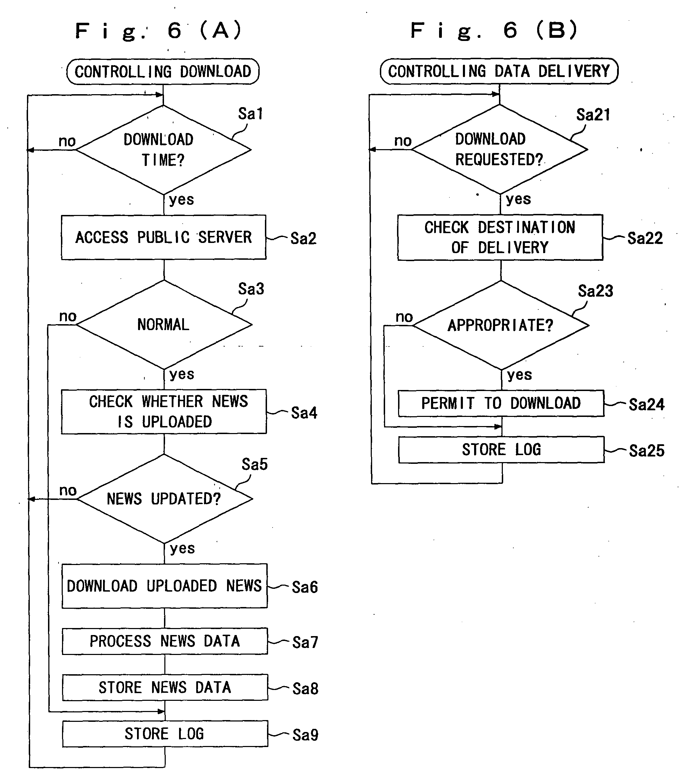

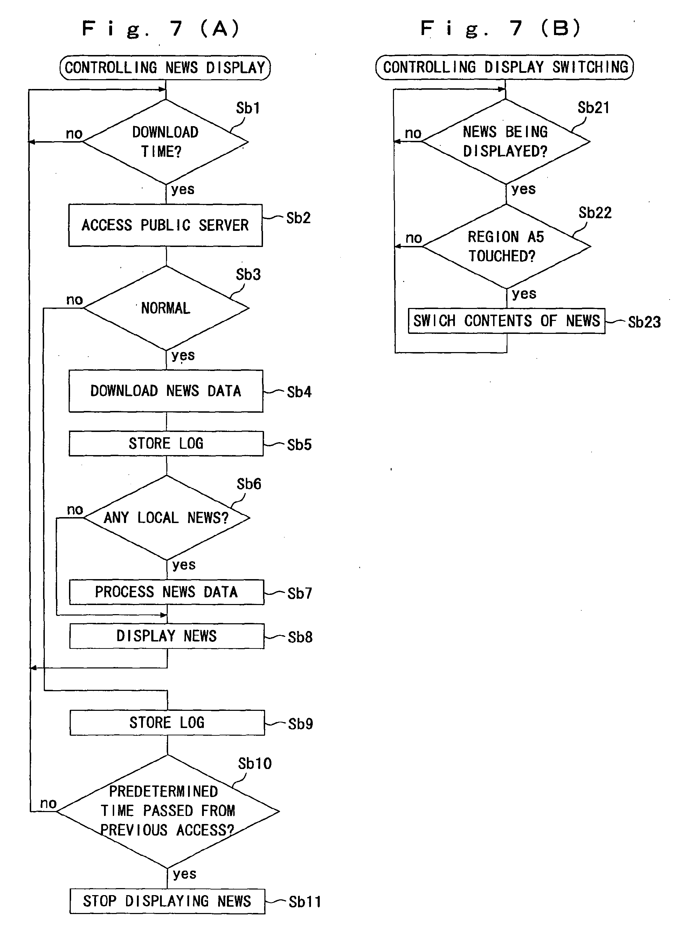

Now, operations of the vending machine display system shown in Fig. 1 will be described with reference to Figs. 6 (A), 6 (B), 7 (A) and 7 (B).

Various kinds of news including world/domestic/business news, sports news, and weather forecast are periodically uploaded to the public server 111 of the management center 110 from the distributing computer 120 owned by a news distributing company, which made a contract with an owner of the vending machine display system to deliver news.

The news server 112 accesses the public server 111 periodically, for example every hour, and checks whether news data is uploaded or not (steps Sa1 to Sa4 of Fig. 6 (A)).

When the public server 111 includes updated news, the news server 112 downloads the news data from the public server 111 and processes the downloaded news data in a form available, to be delivered to the vending machine 100 and stores the data (steps Sa5 to Sa8 of Fig. 6 (A)).

As the news data to be uploaded from the delivering computer 120 to the public server 111 includes various items of news such as world/domestic/business news, sports news, and weather forecast, the news server 112 selects items to be delivered to the vending machine 100 from the various items, sorts the items, and creates news data for the vending machine. The news data to be created here does not need to be limited to one type. If multiple types of news data with different contents are created, for example, news data with only an item of world/domestic/business news, news data with only an item of sports news, news data with only an item of weather forecast, news data with only items of sports news and weather forecast are created, the news server 112 can deliver news data with different contents according to setting environment of the vending machine 100.

The news server 112 stores the history of accessing the public server 111 or the downloaded data number or the like for maintenance (step Sa9 of Fig. 6(A)).

When the vending machine 100 requests permission to download the news data from news server 112, the news server 112 checks ID and the like of the requesting vending machine 100. If the news server 112 determines the vending machine 100 as appropriate, the news server 112 permits the vending machine 100 to download the news data (steps Sa21 to Sa24 of Fig. 6 (B)).

The news server 112 stores the history of accessing the news server 112 from the vending machine 100 or the data number permitted for the vending machine 100 to download or the like for maintenance (step Sa25 of Fig. 6 (B)).

The vending machine 100 periodically, for example every hour, accesses the news server 112 of the management center 110, downloads the prepared news data, and stores an accessing history or the data number of downloaded data or the like for maintenance (steps Sb1 to Sb5 of Fig. 7 (A)). The vending machine 100 does not need to access periodically during a day. The vending machine 100 may stop downloading during a night time period, for example from 21:00 to 5:00.

The vending machine 100 can capture local information for the area the vending machine 100 is placed, for example, event information or sightseeing information via the MC 37 (see Fig. 4). Thus, after downloading the prepared news data, the vending machine 100 determines whether local information is included or not. When local information is included, the vending machine 100 adds the data on local information to the downloaded news data (steps Sb6, Sb7 of Fig. 7 (A)).

The vending machine 100 displays the news NW in a text format on the basis of unprocessed news data or processed news data on the news displaying region A5 of the waiting image displayed on the LCD 14 of the vending machine 100 (see Fig. 5) in a method of displaying the news NW by scrolling sideways in an order of predetermined items at a predetermined speed or in a method of changing still displays for respective items for each predetermined time period (step Sb8 of Fig. 7 (A)).

When the vending machine 100 does not succeed in accessing the news server 112 because of a communication trouble or a breakdown of communication facility or the like, the vending machine 100 stores the history and determines whether a predetermined time period, for example twenty hours, has passed from the previous successful access. If the vending machine 100 still fails to access the news server 112 even after the predetermined time period, the vending machine 100 determines that it cannot display news appropriately and stops displaying the news NW on the news displaying region A5 of the LCD 14 (steps Sb9 to Sb11 of Fig. 7 (A)).

As mentioned above, the news NW is displayed on the news displaying region A5 in a method of displaying the news NW by scrolling sideways in an order of predetermined items at a predetermined speed or in a method of changing still displays for respective items for each predetermined time period. If a customer's finger touches the news displaying region A5 as the news displaying region A5 displays news, the news displaying region A5 changes contents of news by skipping the currently displayed contents to the contents to be displayed next (steps Sb21 to Sb23 of Fig. 7 (B)). For example, if the customer specifies the region A5 twice as the news NW is displayed in the order of world/domestic/business news 1, world/domestic/business news 2, sports news 1, sports news 2, and weather forecast with currently displayed contents being world/domestic/business news 1, the customer can skip the currently displayed contents to sports news 1.

If the vending machine 100 fails to access the news server 112 because of the communication trouble or the breakdown of communication facility or the like, the vending machine 100 determines whether a predetermined time period has passed from the previous successful access. If the vending machine 100 still fails to access the news server 112 even after the predetermined time period, the vending machine 100 determines that it cannot display news appropriately and stops displaying the news NW on the news displaying region A5. Therefore, the vending machine 100 can display appropriate the news NW on the LCD 14. This prevents problems caused by displaying obsolete news form occurring. That is to say, the problems of lowering trustworthiness of the vending machine 100 or lowering the reputation for the manufacturer of the commodities can be prevented from occurring.

As the firewall 113 forbids the public server 111 to access the news server 112, the internal network including the news server 112 is not affected if the public server 111 is attacked from outside. Thus, news data for delivering stored in the news server 112 has no risk of getting tampered.

As the news server 112 stores the history of accessing from the vending machine 100 or the data number permitted for the vending machine 111 to download or the like for maintenance, the news server 112 can check whether news data is successfully delivered to the vending machine 100 and also determines which the vending machine 100 has a trouble in delivering data, and immediately checks and fixes the vending machine 100 by examining logs stored therein.

The vending machine 100 is adapted to capture local information such as event information or sightseeing information via the MC 37. The vending machine 100 is also adapted to process data on the local news to add to the downloaded news data when the vending machine 100 captures local information. Therefore, the vending machine 100 can provide the customer with handy and useful information for the area the vending machine is placed.

When the customer's finger touches the news displaying region A5 as the vending machine 100 displays the news NW on the LCD 14 and the vending machine 100 determines that the region A5 is specified on the basis of signals from the touch sensor 33, the vending machine 100 can change contents of the news by skipping the currently displayed contents to the contents to be displayed next. In this manner, the vending machine 100 can efficiently provide the customer with news necessary to the customer and increase the customer's impression and satisfaction for both the news display and the vending machine 100.

Now, operations for vending a commodity by the vending machine 100 shown in Fig. 1 will be described with reference to Figs. 5, 8 to 12.

The vending machine displays the waiting image on the LCD 14 shown in Fig. 5 when the vending machine is switched on (step Sc1 of Fig. 1). The contents displayed on this waiting image are the same as those described above.

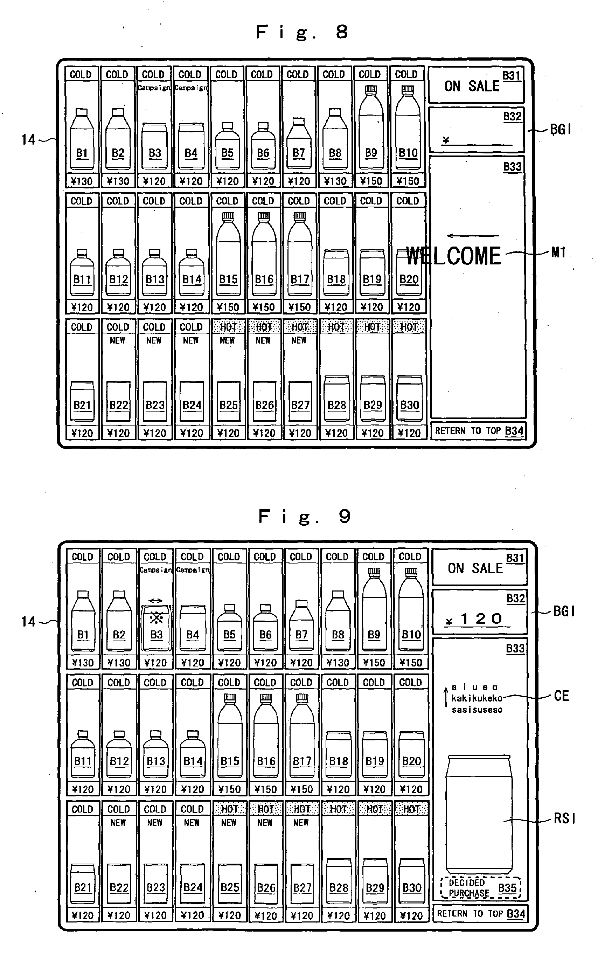

If a coin is dropped through the coin slot 16 or a bill is inserted through the bill slot 18 when the waiting image is displayed, the vending machine changes the waiting image to the vending image shown in Fig. 8 (steps Sc2, Sc4 of Fig. 11). If no coin is dropped through the coin slot 16 or no bill is inserted through the bill slot 18, the vending machine changes the waiting image to the vending image shown in Fig. 8 also when the customer's finger touches the region A1 of the waiting image (steps Sc3, Sc4 of Fig. 11).

In the vending image, commodity selecting regions B1 to B30 for displaying scaled-down commodity images showing commodities available, an operating state displaying region B31 for displaying an operating state of the vending machine by either a vending state or a preparing state, a paid amount displaying region B32 for displaying the amount of money paid through coin slot 16 and bill slot 18, a commodity information displaying region B33 for displaying a full-scale image and description of a commodity, and a return region B34 for returning the image to the waiting image are laid out as shown in Fig. 8. Reference character BGI shown in the vending image denotes a background image (a still image or a motion image). The background image is set by background setting to be described.

The scaled-down commodity image, which is a recommendable size, i.e., 70% to 30%, of a full-scale commodity image, is displayed in the center of each of the commodity selecting regions B1 to B30. Below the scaled-down commodity, the number representing a commodity price is displayed. Above the scaled-down commodity image, a temperature adjust letters of COLD or HOT representing cooling/ warming state of the commodity is displayed. When the temperature adjust letters is COLD, the letters or the background of the letters are displayed in a cold color, i.e., a kind of blue. When the temperature adjust letters is HOT, the letters or the background of the letters are displayed in a warm color, i.e., a kind of red. An icon representing a new commodity or a campaign is arbitrarily set to be displayed between the scaled-down commodity image and the temperature adjust letters. In the commodity price area, letters such as "being cooled" or "being warmed" may be displayed instead of the commodity price area.

A flow of setting a display of the commodity selecting regions B1 to B30 will be briefly described. First, an operator stores the commodities in the each containing path 2b of the commodity containing racks 2, then inputs commodity codes corresponding to each contained commodity with a remote controller connectable to the first controlling part 23 or a handy terminal that can wirelessly communicate with the first controlling part 23, and assigns the commodity code to each of the commodity selecting regions B1 to B 30. Since, commodity images each corresponding to the commodity codes are previously stored in the second controlling part 24, the operator inputs the commodity codes, thereby predetermined scaled-down commodity images and predetermined commodity prices are displayed on the commodity selecting regions B1 to B30. Also, the temperature adjust letters are displayed according to details set at the temperature adjust setting unit 30. In order to display the icon representing the new commodity or the campaign, the operator only needs to select a predetermined icon from a group of prepared icons and then select the commodity selecting region that is to display the icon.

When the waiting image is switched to the vending image shown in Fig. 8, the vending machine displays message M1 such as "welcome" on the vending image for a predetermined time period, for example 0.5 seconds, by scrolling vertically, sideways, or diagonally or in a still image (step Sc5 of Fig. 11).

When the image is changed to the vending image in response to the drop of the coin or the insertion of the bill, or when the coin is dropped or the bill is inserted after the waiting image was changed to the vending image, the vending machine blinks or changes color of frames or commodity prices of commodity selecting regions where scaled-down commodity images available for the current amount of money paid are displayed so that the customer can easily recognize commodities available for the current amount of money paid. The vending machine may also differentiate the commodities available for the current amount of money paid from the commodities unavailable for the current amount of money paid by raising the scaled-down commodity images available for the current amount of money paid.

When the vending image is displayed, the vending machine determines whether a commodity is selected or not, i.e., whether the customer's finger touches any one of the commodity selecting regions B1 to B30 (step Sc6 of Fig. 11).

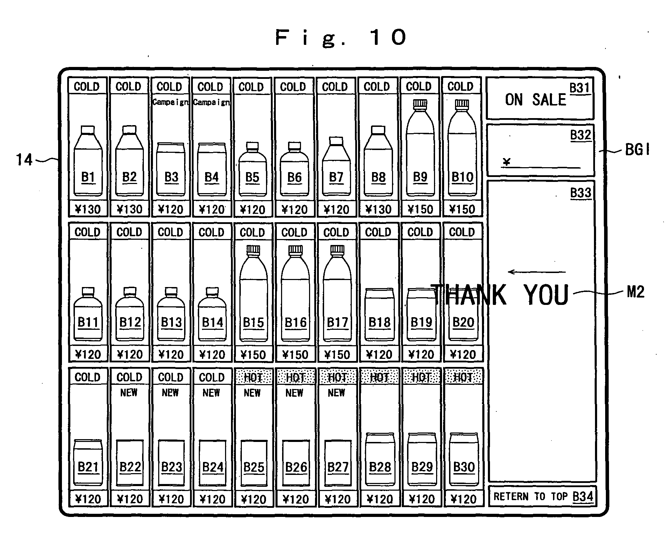

When the commodity is selected, for example when the customer's finger touches a commodity selecting region B3, the vending machine vibrates the scaled-down commodity image displayed on the region B3 vertically or horizontally as shown in Fig. 9 and generates effective sounds in order to visually and aurally call the customer's attention that a given commodity is selected (step Sc7 of Fig. 11).

At the same moment, the vending machine displays the full-scale commodity image RSI of the selected commodity on the commodity information displaying region B33 as shown in Fig. 9 for introducing the commodity to the customer. The vending machine further introduces the commodity to the customer by displaying a description CE of the selected commodity, for example a quantity, a calorie, or an effect, on the same commodity information displaying region B33 by scrolling vertically or horizontally or in a still image (step Sc8 of Fig. 11).

After this step, the vending machine determines whether the amount of money paid is more than the commodity price (step Sc9 of Fig. 11). When the vending machine determines that the amount of money paid is less than the commodity price at step Sc9, for example when the amount of money paid is short for the commodity price or when no coin or bill is paid so far, the operation returns to step Sc6. In other words, until the customer selects the commodity whose price is equal to or less than the amount of money paid, the vending machine repeats vibrating of the scaled-down commodity image at step Sc7, displaying of the full-scale commodity image RSI and displaying of the description CE at step Sc8 based on the customer's manipulation for selecting the commodity. Thus, the customer can obtain information on commodities or information necessary for selecting commodities by arbitrarily displaying the full-scale commodity image RSI and the description CE of the desired commodity.

When the amount of money paid is short for the commodity price at step Sc9, the vending machine may display a message such as "short paid" if needed until the amount of money paid reaches the commodity price by scrolling vertically or horizontally or in a still image.

When the vending machine determines that the amount of money paid is equal to or more than the commodity price at step Sc9, the vending machine discharges the commodity by operating the vent mechanism 2c of the commodity containing rack 2 that contains the selected commodity (step Sc11 of Fig. 11).

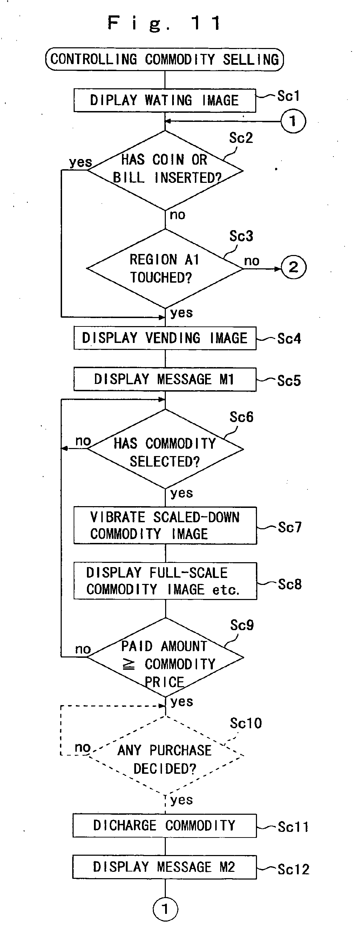

After discharging the commodity, the vending machine displays message M2 such as "thank you" for a predetermined time period, for example 0.5 seconds, by scrolling vertically, horizontally, or diagonally or in a still image as shown in Fig. 10 (step Sc12 of Fig. 11). After displaying the message, the vending machine returns the image from the vending image to the waiting image.

When the amount of money paid is more than the commodity price at step Sc2, the vending machine discharges the commodity at step Sc11 based on the first commodity selection at step Sc6. Thus, vibrating of the scaled-down commodity image at step Sc7, displaying of the full-scale commodity image RSI and the description CE at step Sc8 are performed in a short period of time. In order to avoid such a short time display, the vending machine may be adapted to have step Sc10 marked by dashed line in Fig. 11 after step Sc9. In step Sc10, the vending machine displays a decided purchase region B35 marked by dashed line in Fig. 9 in the commodity information displaying region B33 and determines whether the purchase is decided or not. Therefore, the vending machine can keep displaying the full-scale commodity image RSI and the description CE until the customer's finger touches the decided purchase region B35. Then, the vending machine can discharge the commodity when the customer's finger touches the decided purchase region B35.

Although the image laid out as in Fig. 8 is used as the vending image in the above description, the shape, the number, and the arrangement of commodity selecting regions B1 to B30 can be changed. Thus, the commodity information displaying region B33 can be in any shape and place at least it can display the full-scale commodity image.

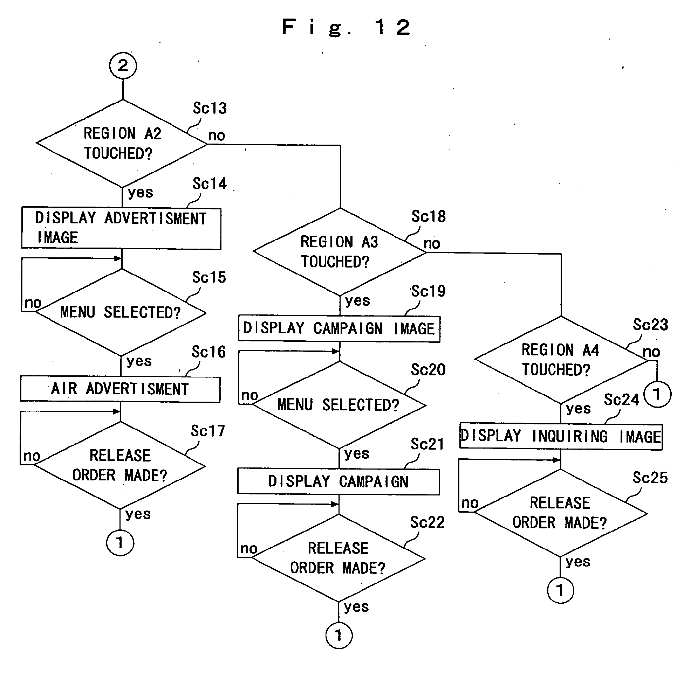

If no coin or bill is paid when the waiting image shown in Fig. 5 is displayed and the customer's finger touches the region A2 on the waiting image, the vending machine changes the waiting image to the advertisement image (not shown) (steps Sc13, Sc14 of Fig. 12).

On the advertisement image, one or more menu selecting region including a still image is set for a customer to recognize an advertisement image. If the customer's finger touches a predetermined menu selecting region on the advertisement image, the vending machine reads an advertisement image (a motion image) corresponding to the menu selecting region out from storage means of the second controlling part 24 and plays the advertisement image with a sound (steps Sc15, Sc16 of Fig. 12).

When the specified advertisement image finishes, or when the customer's finger touches a return region set in the corner of the display image while the advertisement image is played, the vending machine returns the image to the waiting image according to this release order made by any of the conditions (step Sc17 of Fig. 12).

The advertisement image on air on television on a nationwide scale or one limited for a particular area is principally used for the advertisement image. The vending machine can timely display the advertisement image by displaying the advertisement image in the period of airing the advertisement image on television. In this case, the vending machine may be adapted to automatically delete the corresponding advertisement image from storage means when the period of airing the advertisement image on television finishes. The advertisement image may be an advertisement image of a local area where the vending machine is placed, for example the advertisement image of a shopping center made by the shopping center.

If no coin or bill is paid when the waiting image shown in Fig. 5 is displayed and the customer's finger touches the region A3 in the waiting image, the vending machine changes the waiting image to the campaign image (not shown) (steps Sc18, Sc19 of Fig. 12).

On the campaign image, one or more menu selecting region including a still image is set for a customer to recognize a description of a campaign. If the customer's finger touches a predetermined menu selecting region on the campaign image, the vending machine reads a campaign image (a still image) corresponding to the menu selecting region out from storage means of the second controlling part 24 and displays the campaign image. If any sound describing the campaign is attached to the image, the vending machine also outputs the sound (steps Sc20, Sc21 of Fig. 12).

When a predetermined time period has passed since the specified campaign image was displayed, or when the customer's finger touches a return region set in the corner of the display image while the campaign image is displayed, the vending machine returns the image to the waiting image according to this release order made by any of the conditions (step Sc22 of Fig. 12).

The image and letters describing that the customer gets a free gift by lottery if the customer sends an application sheet affixed with a predetermined label attached on a predetermined commodity for a campaign period, or that a customer gets a free gift by lottery if the customer sends a postcard with an answer to a quiz for a campaign period is principally used for the campaign image. The vending machine can timely display the campaign image by displaying the campaign image in the period of airing the campaign image on television. In this case, the vending machine may be adapted to automatically delete the corresponding campaign image from storage means when the campaign period finishes. Of course, the campaign image may be a campaign image of a local area where the vending machine is placed, for example the campaign image of a shopping center made by the shopping center.

The vending machine may display a predetermined campaign image when the vending machine changes the waiting image to the campaign image and return the image to the waiting image according to a release order made by a condition that the customer's finger touches any image displaying a campaign image, instead of including the menu selecting region in a campaign image. If multiple campaigns are conducted, the vending machine may display campaign images by changing the menu selecting region A3 to a campaign image that can be displayed next each time the vending machine returns the image to the waiting image.

If no coin or bill is paid when the waiting image shown Fig. 5 is displayed and the customer's finger touches the region A4 of the waiting image, the vending machine changes the waiting image to the inquiring image (not shown) (steps Sc23, Sc24 of Fig. 1).

On this inquiring image, information on where to make a contact when the vending machine has a failure or a trouble, specifically a street address, a name, a phone number, a fax number, a mail address as well as a model number identifying the vending machine are displayed in letters.

When a predetermined period has passed after the vending machine displayed the inquiring image, or when the customer's finger touches the return region placed in the corner of the inquiring image while the inquiring image is displayed, the vending machine returns the image to the waiting image according to the release order made by any of the conditions (step Sc12 of Fig. 25).

Another display for promoting sales by calling customers' attention to the vending machine is a hot selling commodities information display. The hot selling commodities information display is for the customer to recognize the actual hot selling article. This information is very useful for the customer who cannot make up his mind or who is not selected the commodity.

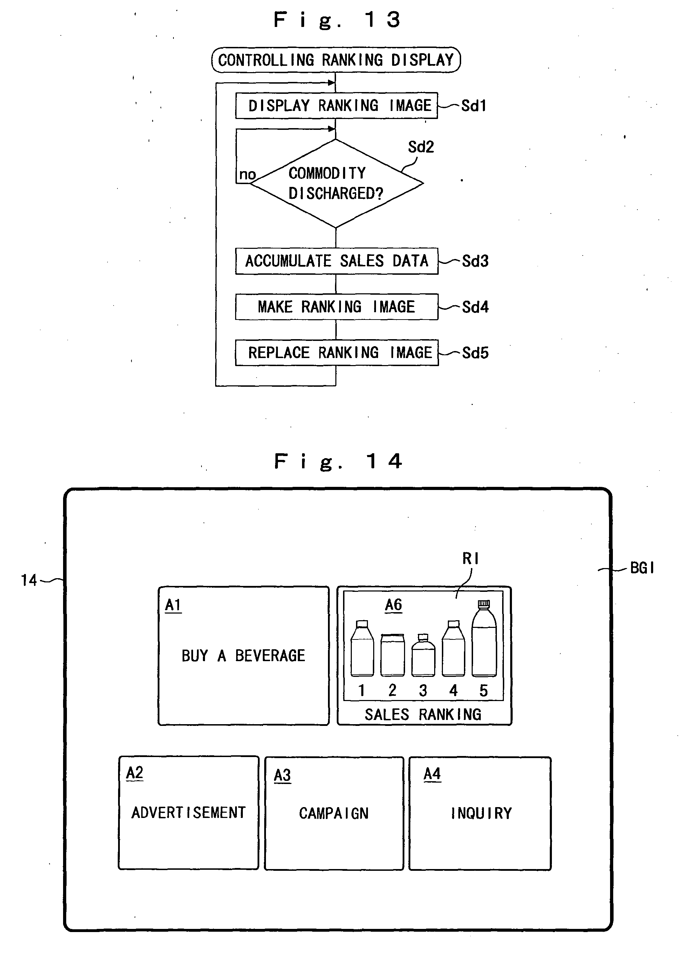

A method for providing the customer with the hot selling commodities information will be described with reference to Figs. 13 and 14.

The vending machine displays the waiting image shown in Fig. 14 on the LCD 14 when the vending machine is switched on (step S1 of Fig. 14).

On this waiting image, a sales ranking displaying region A6 including letters representing "sales ranking" is set in addition to the menu selecting regions A1 to A4. In menu selecting regions A1 to A4, a still image corresponding to each region is displayed in addition to the letters. Reference numeral BGI shown in the waiting image denotes a background image (a still image or a moving image). The background image is set by the background setting to be described.

In the sales ranking displaying region A6 on the waiting image, a predetermined ranking image RI is displayed (step Sd1 of Fig. 13). The ranking image RI shows an order of sales of commodities for the vending machine in letters or by image or the like. When the vending machine is just set and has no sales record, the vending machine displays a prepared initial ranking image RI on the sales ranking displaying region A6. As the initial ranking image RI, a ranking image based on a recent nationwide (e.g., in Japan) sales record or a recent sales record in the area (municipality) the vending machine is set.

The ranking image RI includes letters representing "sales ranking", five numbers representing the order of sales, and scaled-down commodity images lined up in the order of sales as shown in Fig. 14. The scaled-down commodity image is recommendable size, i.e., 50 % to 30% of the full-scale commodity image.

After the vending machine is set, the vending machine accumulates sales data each time it discharges the commodity (steps Sd2, Sd3 of Fig. 13). Specifically, the vending machine writes a time date when it sells a commodity for each commodity (for each commodity code) each time it discharges the commodity. The vending machine calculates the number of commodities it sold in the predetermined period from the present time for each commodity (for each commodity code). Then, the vending machine performs a set of accumulating processes for giving an order of sales for each commodity (for each commodity code) based on the result of the calculation, each time the vending machine discharges the commodity.

The initial ranking image RI is displayed until the vending machine has an order of sales for each commodity, for example, until a week passes after the first commodity is sold. When the vending machine has an order of sales by accumulating the sales data, the vending machine makes the ranking image RI to be displayed (step Sd4 of Fig. 13). In order to make the ranking image RI, the vending machine retrieves scaled-down commodity images with ranking from first to fifth by accumulating the sales data, and makes a image including the scaled-down commodity images assigned to a predetermined place with five numbers representing an order of sales. If multiple commodities have the same number of sales, the numbers representing an order of sales for the ranking image RI are, for example, 1, 1, 3, 4, 5 or 1, 2, 2, 4, 5 or 1, 1, 3, 3, 5.

After the vending machine makes the ranking image RI, the vending machine replaces the initial ranking image RI with the ranking image RI (step Sd5 of Fig. 13). After this step, the vending machine accumulates sales data each time it discharges the commodity. When the order of sales changes as the result of the accumulation, the vending machine makes the ranking image RI according to the new order of sales, replaces the current ranking image RI with the new ranking image RI, and displays a timely ranking at present.

One week is appropriate for a period for determining the order of sales, though the period for determining an order of sales is not limited. The vending machine may determine the order of sales on the basis of a sales record for a month and display the ranking image RI for the order of sales or may determine the order of sales on the basis of a sales record for a year and display the ranking image RI for the order of sales. If the vending machine correctly displays a period for determining a ranking in addition to or instead of letters representing "sales ranking" displayed in the sales ranking displaying region A6, for example "ranking from XX/YY till today", "weekly ranking from XX/YY till today", "monthly ranking from XX/YY till today", or "yearly ranking from XX/YY till today", it can improve trustworthiness of displayed the ranking image RI.

If the vending machine accumulates sales data each time it discharges the commodity, gives an order of sales to each commodity, makes the ranking image RI including the scaled-down commodity images given with the order from first to fifth and sales for respective products in this manner, and displays the ranking image RI, the vending machine promotes sales of the commodities by smoothly selling commodities as it provides the customer with information on hot selling articles with the ranking image RI and serves as useful information for the customer in buying a commodity.

The ranking image RI includes the numbers representing the order of sales and the scaled-down commodity images arranged in the order of the sales. The customer can easily recognize information on the hot selling commodities just by watching the ranking image RI.

As the ranking image RI is displayed in the sales ranking displaying region A6 set on the waiting image, the vending machine can provide information on the hot selling commodities for the customer approaching the vending machine to buy the commodity without asking the customer to perform any special process.

Figs. 13 and 14 exemplify a case that the vending machine gives the same sales ranking to commodities that have the same sales for a predetermined period as the result of accumulating sales data. The vending machine may also adjust the order of sales to 1, 2, 3, 4, and 5 in the later described manner if more than one commodities have the same sales. As a method for adjusting the order of sales, a method of giving an upper ranking to a commodity with smaller regional number among the commodity selecting regions B1 to B30, a method of giving an upper ranking to the cooled commodity in the summer and giving an upper ranking to the warmed commodity in the winter, a method of giving an upper ranking to the commodity with bigger size if the commodities with the same sales are under the same brand, or a method of giving an upper ranking to the commodity with the icon representing the new product or the campaign is used. With such the adjustment of the order of sales, most or all the commodities are prevented from being given the same sales ranking, for example 1. Therefore, the vending machine can inform the customer with the clear order of sales.

Although Figs. 13 and 14 exemplify the ranking image RI including the five numbers representing the order of sales and five scaled-down commodity images arranged in the order of sales, the ranking image RI including more than five numbers representing the order of sales and more than five scaled-down commodity images arranged in the order of sales can be used.

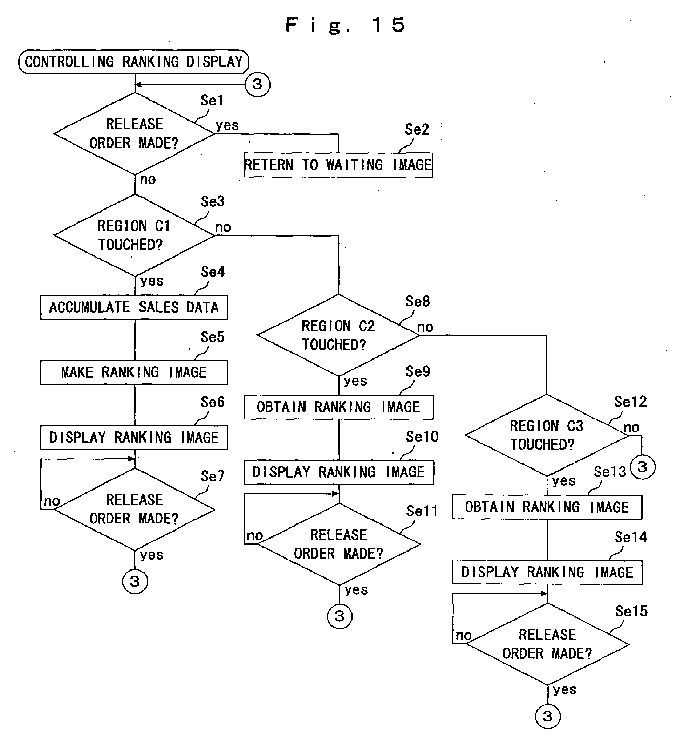

Although Figs. 13 and 14 exemplify the ranking image RI displayed in the sales ranking displaying region A6 set on the waiting image, the vending machine may be adapted to set a menu selecting region including letters representing "sales ranking" on the waiting image and have the sales ranking displayed in response to the customer's selection. This method for displaying the ranking will be described with reference to Figs. 15 to 17.

Fig. 16 shows a waiting image, which includes a menu selecting region A6' including letters representing "display sales ranking" in addition to the menu selecting regions A1 to A4. In the menu selecting regions A1 to A4 and A6', a still image corresponding to each region is displayed along with the letters. Reference characters BGI shown in the waiting image show a background image (a still image or a moving image). The background image is set according to a background setting to be described.

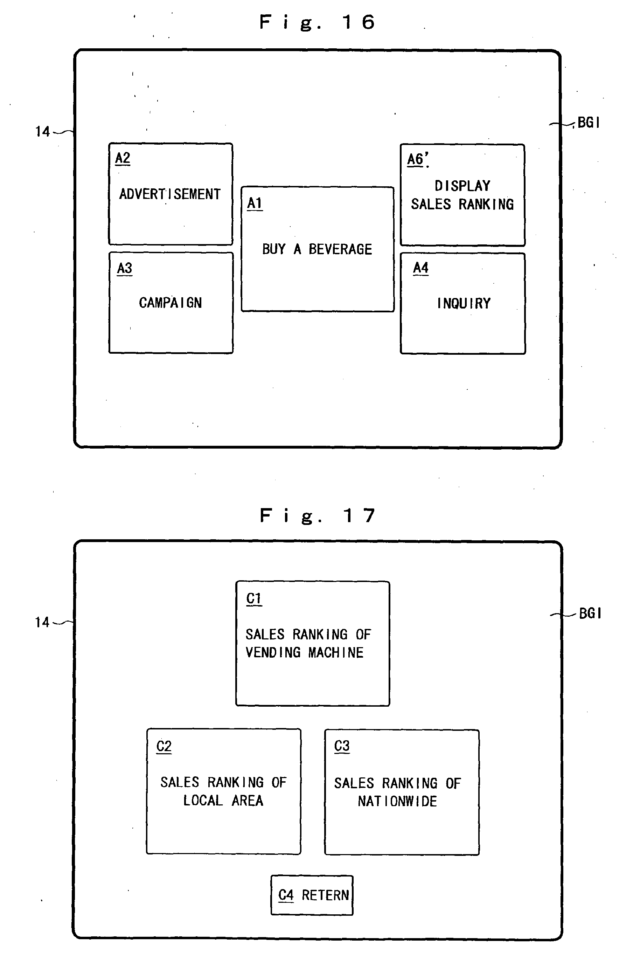

If the customer's finger touches the region A6' of the waiting image shown in Fig. 16, the vending machine changes the waiting image to the ranking image shown in Fig. 17.

The ranking image includes menu selecting region C1 including letters for sales ranking for the vending machine for displaying the sales ranking for the vending machine, a menu selecting region C2 including letters for sales ranking for local area for displaying the sales ranking among the vending machines under the same manufacturer that placed in the same area, for example in a municipality, and a menu selecting region C3 including letters for nationwide sales ranking for displaying the sales ranking among the vending machines under the same manufacturer that placed in the whole country (e.g., in Japan). In each of menu selecting regions C1 to C3, a still image corresponding to each region is also displayed. A return region C4 to return the image to the waiting image is also set. Reference numeral BGI shown in the ranking image denotes a background image (a still image or a moving-image). The background image is set according to a background setting to be described.

If the customer's finger touches the region C1 on the ranking image shown in Fig. 17, the vending machine accumulates sales data, makes the ranking image RI, and displays the same ranking image RI for the vending machine as shown in the sales ranking displaying region A6 in Fig. 14 in the manner described with reference to Fig. 13 (steps Se3 to Se6 of Fig. 15).

When a predetermined time period has passed after the vending machine displayed ranking image RI for the vending machine, or when the customer's finger touches a return region set in the corner of the image as the ranking image RI for the vending machine is displayed, the vending machine returns the image to the ranking image shown in Fig. 17 according to the release order made by any of the conditions (step Sc7 of Fig. 15).

If the customer's finger touches the region C2 in the ranking image shown in Fig. 17, the vending machine obtains the ranking image RI for the local area from the sales management server through a data transmission via the modem 38 or a data transmission via the wireless communication part 40 and displays the ranking image RI for the local area (steps Se8 to Se10 of Fig. 15). The ranking image RI for the local area is made at the sales management server based on information on sales of commodities sent to the sales management server from the vending machines under the same manufacturer set in the municipality. The method for making the ranking image RI for the local area is the same as that for making the ranking image RI for the vending machine, and the image is also in the same form as that of the ranking image RI for the vending machine.

When a predetermined time period has passed after the vending machine displayed the ranking image RI for the local area, or when the customer's finger touches a return region set in the corner of the image as the vending machine displays the ranking image RI for the local area, the vending machine returns the image to the ranking image shown in Fig. 17 according to the release order made by any of the conditions (step Se11 of Fig. 15).

If the customer's finger touches the region C3 on the ranking image shown in Fig. 17, the vending machine obtains the nationwide ranking image RI from the sales management server through a data transmission via the modem 38 or a data transmission via the wireless communication part 40 and displays the nationwide ranking image RI (steps Se12 to Se14 of Fig. 15). The ranking image RI for the nationwide is made at the sales management server based on information on sales of commodity sent to the sales management server from the vending machines under the same manufacturer set the nationwide. The method for making the ranking image RI for the nationwide is the same as that for making the ranking image RI for the vending machine, and the image is also in the same form as that of the ranking image RI for the vending machine.

When a predetermined time period has passed after the vending machine displayed the ranking image RI for the nationwide, or when the customer's finger touches a return region set in the corner of the image as the vending machine displays the ranking image RI for the nationwide, the vending machine returns the image to the ranking image shown in Fig. 17 according to the release order made by any of the conditions (step Sc15 of Fig. 15).

If the customer's finger touches the region C4 after the vending machine returns the image to the ranking image shown in Fig. 17 at steps Se7, Se11, or Se15, the vending machine returns the image to the waiting image shown in Fig. 16 (steps Se1, Se2 of Fig. 15 ).

As the vending machine is adapted to set the menu selecting region A6' including letters representing "display sales ranking" on the waiting image displayed on the LCD 14, change the sales image to the ranking image when the region A6' is specified, and then display the ranking image RI indicating the sales ranking for the vending machine, for the local area, or the nationwide sales ranking according to selected specification of the menu selecting regions C1 to C3 set on the ranking image in this manner, information on the hot selling commodities can be provided for the customer with high trustworthy particularly by the ranking image RI for the local area or the ranking image RI for the nationwide. With the various ranking images elaborately displayed for the customer to select one from them, the vending machine can provide customers with fun in buying the commodity.

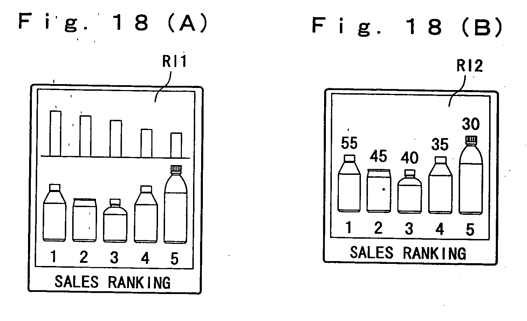

Although the still image including the order of sales and the scaled-down commodity images is used for the each ranking image RI in Figs. 13 to 17, the each ranking image RI may be a still image displayed with a graphic such as a bar graph, which facilitates the customer to visually compare the sales as in a ranking image RI1 shown in Fig. 18 (A) or a still image displayed with sales, which facilitates the customer to visually compare the sales as in a ranking image RI2 shown in Fig. 18 (B).

In order to make an elaborate display of ranking, a moving image may be used as the each ranking image RI. An animation image can call the customer's attention to the vending machine and make the customer have fun in buying the commodity. An animation image can be a racing game of the scaled-down commodity images of ranked commodities or comical commodity images, which are made from the scaled-down commodity images. In the game, the commodity images start from the starting line and goals in the order of the order of sales. An animation image can be a tree climbing game of the scaled-down commodity images of ranked commodities or comical commodity images, which are made from the scaled-down commodity images. In the game, the commodity images start from the starting line and climb to the top in the order of sales.

When the vending machine displays the various images on the LCD 14, the vending machine usually displays a background image BGI (see Figs. 5, 8 to 10, 14, 16, and 17) along with the images in order to fill the vacant space. The background image BGI may have an effect of facilitating the customer to see a displayed image or of improving appearance of the displayed image. If a brightness of the background image BGI is set to the same level for 24 hours, a cost for energy required for displaying the background image BGI are getting higher and the service life of the LCD 14 is getting shortened. Desirably, the background image BGI should be selected among multiple ones for convenience. However, manual switching of the background image BGI increases an operator's workload, which also increases payroll. In addition, the background images are not easily switched timely according to the environment and the season.

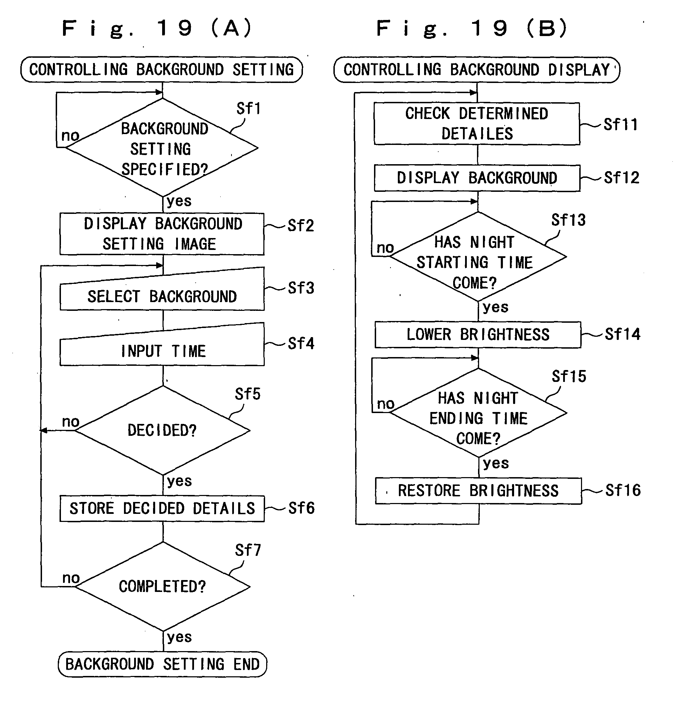

Now, a method for reducing the cost for energy required for displaying the background image BGI and preventing the service life of the LCD 14 from getting shortened and a method for timely switching the background image BGI according to the environment and the season will be described with reference to Figs. 19 to 24.

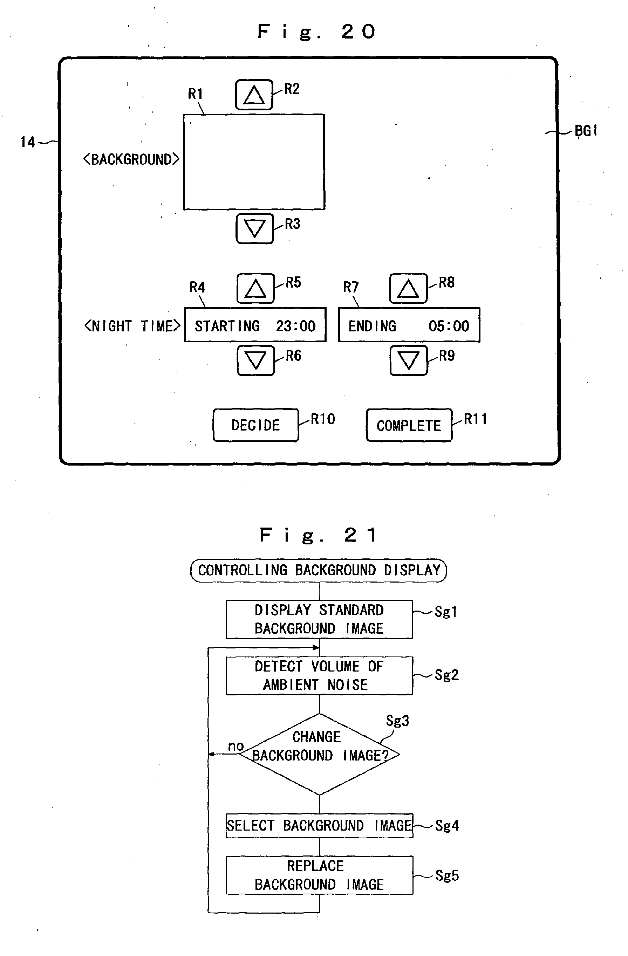

Figs. 19 (A) and 20 show operations for setting the background. When the operator's finger touches a background region set to a main setting image (not shown) or when the operator specifies the same background setting with a handy terminal or a remote controller, the vending machine changes the current image to a background setting image shown in Fig. 20 (steps Sf1, Sf2 of Fig. 19 (A)).

The background setting image includes a background sample displaying region R1 for displaying background samples made of the prepared background images scaled-down to the size; two key regions R2 and R3 for switching the background sample to be displayed in the background sample displaying region RI; a starting time displaying region R4 for displaying the night starting time; two key regions R5 and R6 for changing the time displayed in the starting time displaying region R4; an ending time displaying region R7 for displaying the night ending time; two key regions R8 and R9 for changing the time displayed in the ending time displaying region R7; a decision region R10 for deciding the background and the time; and a completion region R11 for completing the setting of the background. Reference numeral BGI shown in the background setting image denotes the background image (a still image or a moving image).

When the operator's finger touches the key region R2 or R3 in the background setting image, the background samples to be displayed on the background sample displaying region R1 is switched in order in the direction of the specifying key. If the operator's finger touches the key region R5 or R6, the night starting time to be displayed in the starting time displaying region R4 is switched for each hour or for each minuet in the direction of the specifying key (steps Sf3 and Sf4 of Fig. 19 (A)). The time period when the vending machine is least frequently used in a day is selected for the night starting time and the night ending time.

As the background images originating the background samples, a still image and a moving image for advertising a commodity including an image of the commodity, a frame or a part of an advertising image, and a plain image are prepared in addition to a still image or a moving image with relatively little data capacity obtained by taking an image or from CG (Computer Graphics). The background images are stored in storage means of the second controlling part 24.

When the operator's finger touches the decision region R10 after the operator selected the background and inputs the times, the vending machine stores data relating to the selected background and the input times in storage means of the second controlling part 24 (steps Sf5 and Sf6 of Fig. 19 (A)). When the operator's finger touches decision region R10, the vending machine switches the background image BGI of the background setting image to the selected background for making the operator confirm the selected background.

When the operator's finger touches the decision region R10 and then the completion region R11, the vending machine finishes a series of processes and returns the background setting image to another image, for example the main setting image (not shown) or the waiting image (step Sf7 of Fig. 19 (A)). Selection of the background and input of the times can be repeated until the operator's finger touches the completion region R11. Thus, if the operator selects a wrong background or inputs a wrong time, the operator can easily correct them.

Fig. 19 (B) shows operations for displaying the background. When the vending machine is switched on, the vending machine checks the previously determined details of a background setting and displays the set background image as the background image BGI for the waiting image (steps Sf11 and Sf12 of Fig. 19 (B)). Even if the waiting image is switched to another image such as the vending image, the set background image is used as a background image for the image.

When the background image BGI is displayed, the vending machine determines whether the previously set night starting time has come. When the night starting time, for example 23:00 has come, the vending machine lowers a brightness of the background image BGI by 1/2 to 1/4 (steps Sf13 and Sf14 of Fig. 19 (B)). The vending machine only lowers the brightness of the background image GGI for each image, and leaves the brightness of the regions relating to sell commodities, for example the menu selecting regions on the waiting image.

After lowered the brightness of the background image BGI, the vending machine determines whether the previously set night ending time has come. When the night ending time, for example 05:00 has come, the vending machine restores the brightness of the background image BGI (steps Sf15 and Sf16 of Fig. 19 (B)).

As the vending machine lowers the brightness of the background image BGI when the previously set night starting time has come, and restores the brightness of the background image BGI when the previously set night ending time has come, the vending machine can reduce a cost for energy required to display the background image BGI and also prevents the service life of the LCD 14 being shortened.

If the operator sets the period between the night starting time and the night ending time to the period when the vending machine is least frequently used in a day, the vending machine has the least risk of having a trouble in selling commodities in the dimmed state during the period.

As the operator can arbitrarily select the background image BGI to be displayed from the prepared background samples, the vending machine can arbitrarily display the background image appropriate for the vending machine, the background image appropriate for the commodities, or the background image according to the season in order to promote sales of the commodities.

The vending machine only lowers the brightness of the background image BGI in each image during the period, and leaves the brightness of the regions relating to sell commodities, for example the menu selecting regions of the waiting image. Therefore, the vending machine asks the customer to perform the same processes to buy commodities during the period as these during the other period.

Although the processes of manually selecting the background image are exemplified in Figs. 19 (A) and (B), and Fig. 20, the selection can be done automatically.

Fig. 21 shows a first example where the vending machine automatically selects the background image. Fist, the vending machine displays a standard background image as a background image for each image, and then detects the volume of ambient noise around the vending machine (steps Sg1 and Sg2 of Fig. 21). The vending machine is adapted to connect a microphone detectable of the volume of ambient noise with the second controlling part 24 shown in Fig. 4 for this detection and send data on the volume to the second controlling part 24.

Then, the vending machine determines whether the volume of ambient noise changes on the basis of data on the volume, determines whether it should change the background image to another one on the basis of determination of a change in the volume of ambient noise, and when it determines that it should change the background image, the vending machine sends switching signals according to the change in the volume (step Sg3 of Fig. 21).

Next, the vending machine selects the background image matching to the current volume of ambient noise among the prepared background images on the basis of switching signals and replaces the current background image with the selected background image (steps Sg4 and Sg5 of Fig. 21).

Specifically, the vending machine classifies the volume as Big, Standard, or Small according to the criteria. The vending machine determines the classification of the current volume of ambient noise. If the current volume of ambient noise is classified as Big, the vending machine selects a gaudy background image. If the current volume of ambient noise is classified as Small, the vending machine selects a modest background image. Under an environment where the volume changes momentarily or temporarily, the vending machine cannot succeed in changing to an appropriate background image. Under such the environment, the vending machine desirably calculates the average volume for a predetermined period, and determines whether it should change the background image on the basis of the average volume.

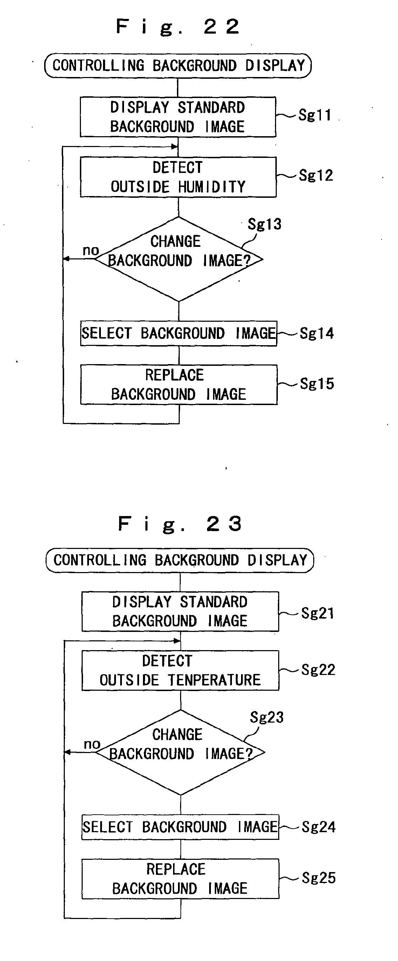

Fig. 22 shows a second example where the vending machine automatically selects the background image. First, the vending machine displays a standard background image as a background image for each image, and then detects the humidity outside the vending machine (steps Sg11 and Sg12 of Fig. 22). The vending machine is adapted to connect a humidity sensor detectable of the humidity outside the vending machine with the second controlling part 24 shown in Fig. 4 for this detection and send data on the humidity outside the vending machine to the second controlling part 24.

Then, the vending machine determines whether the humidity outside the vending machine changes on the basis of data on the humidity outside the vending machine, determines whether it should change the background image to another one on the basis of determination of a change in the humidity outside the vending machine, and when it determines that it should change the background image, the vending machine sends switching signals according to the change in the humidity (step Sg13 of Fig. 22).

Next, the vending machine selects the background image matching to the current humidity outside the vending machine among the prepared background images on the basis of the switching signals and replaces the current background image with the selected background image (steps Sg14 and Sg15 of Fig. 21).

Specifically, the vending machine classifies the humidity as High, Standard, and Low according to the criteria. The vending machine determines the classification of the current humidity outside the vending machine. If the current humidity outside the vending machine is classified as High, the vending machine selects a background image that visually provides the customer with dry and pleasant impression or a background image including an advertisement of a commodity that visually provides the customer with dry and pleasant impression. If the current humidity outside the vending machine is classified as Low, the vending machine selects a background image that visually provides, the customer with moist and pleasant impression or a background image including an advertisement of an isotonic drink. Under an environment where the humidity changes momentarily or temporarily, the vending machine cannot succeed in changing to an appropriate background image. Under such the environment, the vending machine desirably calculates the average humidity for a predetermined period, and determines whether it should change the background image on the basis of the average humidity.

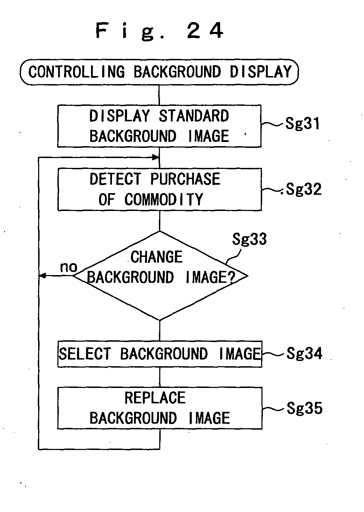

Fig. 23 shows a third example where the vending machine automatically selects the background image. First, the vending machine displays a standard background image as a background image for each image, and then detects the temperature outside the vending machine (steps Sg21 and Sg22 of Fig. 23). The vending machine is adapted to connect a temperature sensor detectable of the temperature outside the vending machine with the second controlling part 24 shown in Fig. 4 for this detection and send data on the temperature outside the vending machine to the second controlling part 24.

Then, the vending machine determines whether the temperature outside the vending machine changes on the basis of data on the temperature outside the vending machine, determines whether it should change the background image to another one on the basis of determination of a change in the temperature outside the vending machine, and when it determines that it should change the background image, the vending machine sends switching signals according to the change in the temperature (step Sg23 of Fig. 23).

Next, the vending machine selects the background image matching to the current temperature outside the vending machine among the prepared background images on the basis of the switching signals and replaces the current background image with the selected background image (steps Sg24 and Sg25 of Fig. 23).

Specifically, the vending machine classifies the temperature as High, Standard, and Low according to the criteria. The vending machine determines the classification of current temperature outside the vending machine. If the current temperature outside the vending machine is classified as High, the vending machine selects a background image that visually provides the customer with refreshing impression or a background image including an advertisement of commodity that visually provides a customer with refreshing impression. If the current temperature outside the vending machine is classified as Low, the vending machine selects a background image that visually provides the customer with warm impression or a background image including an advertisement of a warmed beverage. Under an environment with momentary the temperature changes momentarily or temporarily, the vending machine cannot succeed in changing to an appropriate background image. Under such the environment, the vending machine desirably calculates the average temperature for a predetermined period, and determines whether it should change the background image on the basis of the average temperature.

Fig. 24 shows a fourth example where the vending machine automatically selects the background image. First, the vending machine displays a standard background image as a background image for each image, and then detects a purchase of a commodity from the vending machine (steps Sg31 and Sg32 of Fig. 24). The vending machine can use discharging controlling signals toward the discharge driving part 27 shown in Fig. 4.

Then, the vending machine determines the type of the purchased commodity on the basis of the discharging controlling signals, determines whether it should change the background image to another one on the basis of comparison between the purchased commodity and the previous purchased commodity, and when it determines that it should change the background image, the vending machine sends switching signals according to the purchased commodity (step Sg33 of Fig. 24).

Next, the vending machine selects the background image matching to the currently purchased commodity among the prepared background images on the basis of the switching signals and replaces the current background image with the selected background image (steps Sg34 and Sg35 of Fig. 24).

Specifically, when the customer bought a predetermined brand of commodity, the vending machine selects a background image including an advertisement of the commodity, or when the customer bought a carbonated beverage, the vending machine selects a background image that visually provides the customer with refreshing impression.

Although the volume of ambient noise, the outside temperature, the outside humidity, and the purchased commodity price are used as exemplary parameters for changing the background image in controlling the background display shown in Figs. 21 to 24, other parameters can be used for changing the background image.

Although the vending machine captures the background images in the storage means of the second controlling part 24 by the MC 37, the data transmission via the modem 38, or the data transmission via the wireless communication part 40 as an example, the vending machine can be adapted to take an image of a surrounding place of the vending machine with its camera and capture the image as a background image.

Preferable embodiments described in this specification are only for examples and do not intend to limit the present invention. The scope of the present invention is defined in the appended claims. All the alterations included in the sense of the claims will be included in the present invention.

## Claims

1. A vending machine display system comprising:
a public server (111) for allowing a delivering computer (120) to periodically upload news data;
a news server (112) for periodically checking news data uploaded to the public server (111) and, in response to an updated news data, downloading the updated news data, processing the updated news data into a form available for delivering to a vending machine (100) and storing a prepared news data; and
the vending machine (100) including means for periodically accessing the news server (112), downloading the prepared news data, and displaying news on a news displaying region (A5) of a display (14),
wherein said vending machine (100) is provided with means for stopping displaying news on the news displaying region (A5) if it has been failing to access the news server (112) more than a predetermined time period.

2. The vending machine display system according to claim 1, wherein the public server (111) and the news server (112) are placed in a management center (110) for managing news delivery, with a firewall (113) for forbidding the public server (111) to access the news server (112) provided between the public server (111) and the news server (112).

3. The vending machine display system according to claim 1, wherein the news server (112) comprises means for processing the updated news data downloaded from the public server (111) and creating a different type news data from the updated news data so that the different type news data can be delivered to the vending machine (100) according to an environment where the vending machine (100) is set.

4. The vending machine display system according to claim 1, wherein the vending machine (100) comprises:
a touch sensor (33) for detecting touched coordinates on a surface of the display (14);
means for determining a touch on the news displaying region (A5) of the display (14) as the news is displayed on the basis of signals from the touch sensor (33); and
means for changing contents of the news when the news displaying region (A5) is touched.

5. The vending machine display system according to claim 1, wherein the vending machine (100) is provided with a wireless communication part (40) that can be connected to the news server (112) via a wireless packet transmission network (130).

6. The vending machine display system according to claim 1, wherein the vending machine (100) is provided with a modem (38) that can be connected to the news server (112) via an Internet.
